# EUROPÄISCHE PATENTSCHRIFT

(11) **EP 2 947 282 B1**
(45) Veröffentlichungstag und Bekanntmachung des Hinweises auf die Patenterteilung: **05.10.2016**
(21) Anmeldenummer: 14168796.2
(22) Anmeldetag: 19.05.2014
(51) Int. Cl.: F01D 25/26, F01D 25/28

(54) **Zwischengehäuse für eine Gasturbine sowie Gasturbine**
Intermediate housing for a gas turbine and gas turbine
Boîtier intermédiaire pour une turbine à gaz et turbine à gaz

(43) Veröffentlichungstag der Anmeldung: 25.11.2015
(73) Patentinhaber: MTU Aero Engines AG, 80995 München (DE)
(72) Erfinder: Kirchner, Daniel, 80639 München (DE); Eichinger, Alois, 85276 Pfaffenhofen (DE)

(56) Entgegenhaltungen:
- GB-A- 2 244 523
- US-A- 5 273 396
- US-A- 5 593 277
- US-B2- 6 672 833

## Beschreibung

Die Erfindung betrifft ein Zwischengehäuse gemäß dem Oberbegriff von Patentanspruch 1 sowie eine Gasturbine.

Ein solches Zwischengehäuse für eine Gasturbine und eine Gasturbine mit einem solchen Zwischengehäuse sind beispielsweise der US 5,593,277 als bekannt zu entnehmen. Das Zwischengehäuse weist wenigstens ein äußeres Gehäuseelement auf, welches üblicherweise auch als "Gehäuseschale" bezeichnet wird. Beispielsweise ist das Gehäuseelement zumindest im Wesentlichen ringförmig ausgebildet. Zudem sei auch auf die US 6,672,833 B2 und der US 5,180,282 hingewiesen.

Das bekannte Zwischengehäuse umfasst ferner eine Mehrzahl von Kanalsegmenten. Die Kanalsegmente sind in radialer Richtung innenseitig des äußeren Gehäuseelements angeordnet und in radialer Richtung nach innen zumindest teilweise von dem äußeren Gehäuseelement beabstandet. Die Kanalsegmente sind ferner in Umfangsrichtung des Gehäuseelements aufeinanderfolgend angeordnet. Mit anderen Worten sind die Kanalsegmente in Umfangsrichtung des Gehäuseelements hintereinander angeordnet. Durch die Kanalsegmente ist jeweils wenigstens ein von einem Gas durchströmbarer Kanal zumindest in radialer Richtung wenigstens teilweise begrenzt. Bezogen auf die Strömungsrichtung des Gases durch den Kanal ist das Zwischengehäuse beispielsweise zwischen zwei Turbinenbereichen der Gasturbine angeordnet. Ein erster dieser Turbinenbereiche ist beispielsweise ein Hochdruck-Turbinenbereich oder eine Hochdruck-Turbine, wobei ein zweiter der Turbinenbereiche beispielsweise eine Niederdruck-Turbine oder ein Niederdruck-Turbinenbereich der Gasturbine, insbesondere eines Flugtriebwerks ist.

Das Gas weist beispielsweise eine hohe Temperatur auf und ist somit ein Heißgas, welches mittels des Kanals in axialer Richtung der Gasturbine von einem der Turbinenbereiche zu dem anderen der Turbinenbereiche geführt wird.

Hierbei ist eine segmentierte Bauweise des Kanals vorgesehen, welche beispielsweise aufgrund der Größe des äußeren Gehäuseelements in Verbindung mit dessen Herstellverfahren zum Einsatz kommt. Beispielsweise wird das äußere Gehäuseelement durch Gießen, das heißt mittels eines Gießverfahrens hergestellt. Darüber hinaus können durch die segmentierte Bauweise, das heißt durch den Einsatz der mehreren Kanalsegmenten Spannungen, die aufgrund eines thermischen Gradienten im Kanal entstehen können, gering gehalten werden.

Üblicherweise ist jedem der Kanalsegmente wenigstens ein eigener Halter zugeordnet, welcher auch als "Hanger" bezeichnet wird. Somit kommt auch bei diesen Haltern eine segmentierte Bauweise zum Einsatz, da die Halter als separat voneinander hergestellte Bauteile ausgebildet sind. Über diese Halter werden die jeweiligen Kanalsegmente am äußeren Gehäuseelement befestigt, insbesondere aufgehängt. Die segmentierte Bauweise der Halter kommt zum Einsatz, um Anrisse im Betrieb aufgrund von hohen thermischen Spannungen zu vermeiden.

Diese Vielzahl an Haltern führt jedoch zu einer zeit- und kostenaufwendigen Montage der Halter selbst und der Kanalsegmente, was zu einer zeit- und kostenaufwendigen Herstellung des Zwischengehäuses insgesamt führt.

Aufgabe der vorliegenden Erfindung ist es daher, ein Zwischengehäuse und eine Gasturbine der eingangs genannten Art derart weiterzuentwickeln, dass sich eine besonders einfache, zeit- und kostengünstige Herstellung des Zwischengehäuses realisieren lässt.

Diese Aufgabe wird erfindungsgemäß durch ein Zwischengehäuse mit den Merkmalen des Patentanspruchs 1 und durch eine Gasturbine mit den Merkmalen des Patentanspruchs 11 gelöst.

Vorteilhafte Ausgestaltungen mit zweckmäßigen Weiterbildungen der Erfindung sind in den jeweiligen Unteransprüchen angegeben, wobei vorteilhafte Ausgestaltungen des Zwischengehäuses als vorteilhafte Ausgestaltungen der Gasturbine anzusehen sind und umgekehrt.

Ein erster Aspekt der Erfindung betrifft ein Zwischengehäuse für eine Gasturbine, insbesondere ein Flugtriebwerk. Das Zwischengehäuse wird üblicherweise auch als "Turbinenzwischengehäuse" bezeichnet. Das Zwischengehäuse weist wenigstens ein äußeres Gehäuseelement auf. Ferner weist das Zwischengehäuse eine Mehrzahl von Kanalsegmenten auf. Die Kanalsegmente sind in radialer Richtung des äußeren Gehäuseelements und somit des Zwischengehäuses innenseitig des äußeren Gehäuseelements angeordnet. Ferner sind die Kanalsegmente in Umfangsrichtung des Gehäuseelements aufeinanderfolgend, das heißt hintereinander angeordnet. Durch die Kanalsegmente ist jeweils wenigstens ein von einem ersten Gas durchströmbarer Kanal zumindest in radialer Richtung wenigstens teilweise begrenzt. Hierdurch ist eine segmentierte Bauweise des Kanals realisiert.

Um nun eine besonders einfach, zeit- und kostengünstige Herstellung des Zwischengehäuses zu realisieren, ist erfindungsgemäß ein den Kanalsegmenten gemeinsames, einteilig ausgebildetes Ringelement vorgesehen, über welches die Kanalsegmente an dem äußeren Gehäuseelement gehalten sind. Das Ringelement ist zumindest teilweise ringförmig und dabei als in Umfangsrichtung des äußeren Gehäuseelements vollständig geschlossener Ring oder als Ringsegment ausgebildet.

Der Erfindung liegt die Idee zugrunde, nicht für jedes der Kanalsegmente einen eigenen, separaten Halter zu verwenden, sondern zum Haltern der Kanalsegmente an dem äußeren Gehäuseelement wird das den Kanalsegmenten gemeinsame Ringelement verwendet. Vorzugsweise wird genau ein den Kanalsegmenten gemeinsames Ringelement verwendet. Das Ringelement kann dabei auf einfache Weise und zeitgünstig am äußeren Gehäuseelement befestigt werden. Darüber hinaus können auch die Kanalsegmente selbst besonders einfach am Ringelement befestigt werden. Insbesondere gegenüber der Montage einer Vielzahl von jeweiligen, separat voneinander hergestellten Haltern zum Befestigen der Kanalsegmente am äußeren Gehäuseelement lässt sich die Montage und die Herstellung wesentlich einfacher, zeit- und kostengünstiger durchführen. Darüber hinaus kann das Ringelement selbst kostengünstig hergestellt werden.

Erfindungsgemäß weist das Ringelement einen Ringkörper auf, von welchem in radialer Richtung des äußeren Gehäuseelements nach innen Laschen oder Arme abstehen, über welche die Kanalsegmente an dem Ringelement gehalten sind. Vorzugsweise ist es vorgesehen, dass der Ringkörper und die Laschen einstückig miteinander ausgebildet sind. Dabei sind in Umfangsrichtung des äußeren Gehäuseelements und somit des Ringelements zwischen den Laschen Durchgangsöffnungen vorgesehen, über welche die Laschen in Umfangsrichtung voneinander beabstandet sind. Die Durchgangsöffnungen weisen jeweils eine in axialer Richtung der Gasturbine und somit des äußeren Gehäuseelements verlaufende Durchtrittsrichtung auf. Dies bedeutet, dass die Durchgangsöffnungen in axialer Richtung offen sind. Ferner sind die Durchgangsöffnungen vorzugsweise in radialer Richtung nach innen hin offen und in radialer Richtung nach außen hin durch den Ringkörper begrenzt. Somit sind die Laschen über den Ringkörper miteinander verbunden.

Die Durchgangsöffnungen wirken als Entlastungsöffnungen oder Entlastungsschlitze zwischen den Laschen, so dass übermäßig, thermisch bedingte Umfangsspannungen im Ringelement vermieden werden können. Die einzelnen Laschen, an denen die Kanalsegmente aufgehängt sind, sind somit in Umfangsrichtung zumindest im Wesentlichen spannungsfrei.

Bei einer weiteren vorteilhaften Ausführungsform der Erfindung sind die Durchgangsöffnungen mittels einer Dichtungseinrichtung verschlossen. Hierdurch können unerwünschte Leckagen vermieden werden, so dass sich ein besonders effizienter Betrieb der Gasturbine realisieren lässt.

Eine weitere Ausführungsform des erfindungsgemäßen Zwischengehäuses zeichnet sich dadurch aus, dass die Dichtungseinrichtung zumindest zwei in axialer Richtung hintereinander angeordnete Lagen mit jeweiligen Dichtungselementen aufweist. Die Dichtungselemente einer ersten der Lagen und die Dichtungselemente einer zweiten der Lagen sind in Umfangsrichtung zueinander versetzt angeordnet und überlappen sich in axialer Richtung gegenseitig teilweise. Hierdurch kann eine besonders gute Dichtwirkung erzielt werden. Die Durchgangsöffnungen zwischen den Laschen sind Zwischenräume, welche durch die segmentierten Dichtungselemente geschlossen und somit abgedichtet werden können. Beispielsweise sind die Dichtungselemente aus einem metallischen Werkstoff gebildet. Die Dichtungselemente sind dabei beispielsweise als Dichtbleche ausgebildet. Hierdurch ist ein Dichtblechpaket darstellbar, welches eine besonders gute Dichtwirkung gewährleistet.

In weiterer Ausgestaltung der Erfindung ist durch das äußere Gehäuseelement und die Kanalsegmente zumindest teilweise eine den Kanal zumindest teilweise umgebende Kammer begrenzt, welche mit einem weiteren Gas, das gegenüber dem den Kanal durchströmenden, ersten Gas einen höheren Druck aufweist, beaufschlagbar ist. Bei dem weiteren Gas handelt es sich beispielsweise um Sperrluft, die die Kanalsegmente außenumfangsseitig zumindest teilweise umströmen kann. Dadurch können die Kanalsegmente gekühlt werden.

Bei dem den Kanal durchströmenden, ersten Gas handelt es sich beispielsweise um Heißgas, so dass der Kanal als Heißgaskanal ausgebildet ist. Das weitere Gas (Sperrluft) weist dabei eine wesentlich geringere Temperatur als das erste Gas auf. Die Kammer ist beispielsweise als Ringraum ausgebildet, der von dem weiteren Gas durchströmt werden kann. Die genannte Sperrluft wirkt als Kühlluft mittels welcher das äußere Gehäuseelement und die Kanalsegmente gekühlt werden können. Die genannte Dichtungseinrichtung dichtet die Kammer insbesondere gegen den Kanal besonders gut ab, so dass ein unerwünschter Austritt von Sperrluft aus der Kammer vermieden werden kann.

Zur Realisierung einer besonders guten Dichtwirkung der Dichtungseinrichtung hat es sich als vorteilhaft gezeigt, wenn die Dichtungselemente auf einer der Kammer zugewandten Seite des Ringelements, insbesondere der Laschen, angeordnet sind. Da das weitere Gas einen höheren Druck als das erste Gas aufweist, herrscht auf der der Kammer zugewandten Seite des Ringelements ein höherer Druck als auf einer dieser Seite abgewandten, zweiten Seite. Durch diesen höheren Druck werden die Dichtungselemente zusammen und gegen das Ringelement gedrückt, so dass die Dichtwirkung nochmals verstärkt wird.

Eine weitere Ausführungsform zeichnet sich dadurch aus, dass die Kanalsegmente jeweils mittels wenigstens einer Schraubverbindung an dem Ringelement befestigt sind. Einerseits lässt sich hierdurch eine besonders feste Halterung der Kanalsegmente an dem Ringelement realisieren. Andererseits kann eine besonders einfache, zeit- und kostengünstige Montage realisiert werden.

Bei einer weiteren Ausführungsform der Erfindung ist es vorgesehen, dass das Ringelement mittels wenigstens einer Schraubverbindung an dem äußeren Gehäuseelement gehalten ist. Hierdurch kann das Ringelement besonders einfach und fest am äußeren Gehäuseelement montiert werden.

Schließlich hat es sich als vorteilhaft gezeigt, wenn das Ringelement in axialer Richtung teilweise zwischen dem äußeren Gehäuseelement und wenigstens einem weiteren Gehäuseelement der Gasturbine anordenbar beziehungsweise angeordnet und durch Einklemmen des Ringelements zwischen den Gehäuseelementen in radialer Richtung fixierbar ist. Hierdurch kann die Anzahl an Befestigungselementen zum Haltern des Ringelements am äußeren Gehäuseelement besonders gering gehalten werden, so dass die Teileanzahl, das Gewicht und die Kosten des Zwischengehäuses insgesamt besonders gering gehalten werden können. Des Weiteren besteht die Möglichkeit, dass das Ringelement und/oder das Kanalsegment mindestens einen Haken aufweist, wobei der Haken zum Eingriff in eine korrespondierende Nut des Kanalelements und/oder des Ringelements ausgebildet ist.

In einer weiteren vorteilhaften Ausgestaltung der Erfindung kann das Ringelement mit seinen Bauelementen einstückig mittels eines additiven Herstellungsverfahrens hergestellt sein. Dadurch ist eine einfache und kostengünstige Herstellung des Ringelements möglich.

Ein zweiter Aspekt der Erfindung betrifft eine Gasturbine mit wenigstens einem im Vorhergehenden beschriebenen Zwischengehäuse. Dabei ist der Kanal in Strömungsrichtung des Gases durch den Kanal zwischen zwei Turbinenbereichen der Gasturbine angeordnet. Ein erster der Turbinenbereiche ist beispielsweise ein Hochdruck-Turbinenbereich oder eine Hochdruck-Turbine der Gasturbine, wobei ein zweiter der Turbinenbereiche ein Niederdruck-Turbinenbereich oder eine Niederdruck-Turbine der Gasturbine, insbesondere des Flugtriebwerks ist.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigen:
- Fig. 1: ausschnittsweise eine schematische Längsschnittansicht eines erfindungsgemäßen Zwischengehäuses für eine Gasturbine, mit einer Mehrzahl von Kanalsegmenten, welche über ein den Kanalsegmenten gemeinsames, einteilig ausgebildetes Ringelement an einem äußeren Gehäuseelement des Zwischengehäuses gehalten sind;
- Fig. 2: ausschnittsweise eine schematische Vorderansicht des Ringelements gemäß Figur 1;
- Fig. 3: ausschnittsweise eine schematische Vorderansicht einer Dichtungseinrichtung des erfindungsgemäßen Zwischengehäuses; und
- Fig. 4: ausschnittsweise eine schematische Draufsicht der Dichtungseinrichtung gemäß Figur 3.

In den Figuren sind gleiche oder funktionsgleiche Elemente mit gleichen Bezugszeichen versehen.

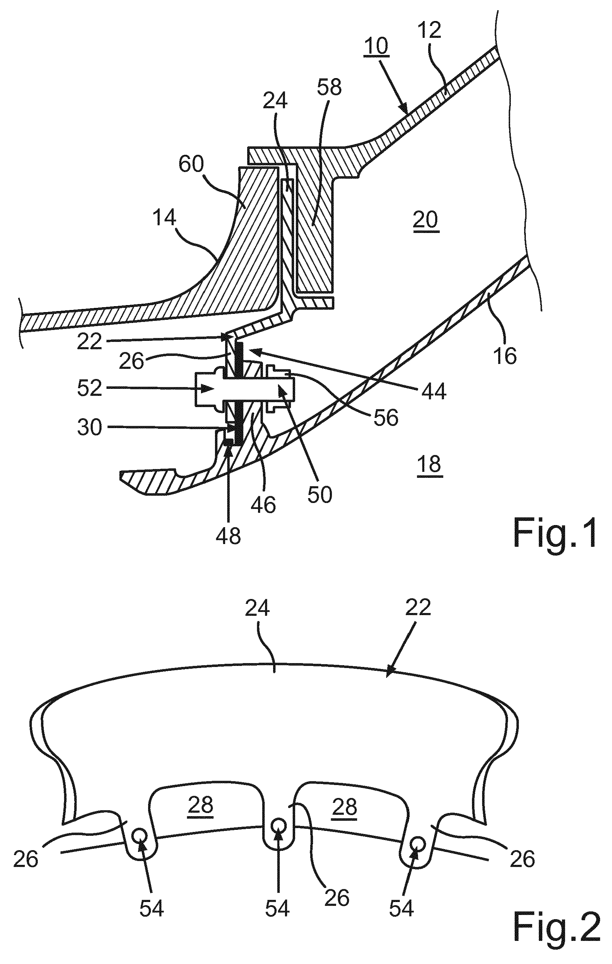

Fig. 1 zeigt in einer schematischen Längsschnittansicht ein im Ganzen mit 10 bezeichnetes Zwischengehäuse für eine Gasturbine. Das Zwischengehäuse 10 wird üblicherweise auch als "Turbinenzwischengehäuse" bezeichnet und umfasst wenigstens ein äußeres Gehäuseelement 12. Das äußere Gehäuseelement 12 ist beispielsweise eine äußere Gehäuseschale, welche zumindest im Wesentlichen ringförmig ausgebildet sein kann.

Das Zwischengehäuse 10 kann ferner wenigstens ein in Fig. 1 nicht erkennbares Nabenelement einer Nabe des Zwischengehäuses 10 umfassen. Das Nabenelement ist in radialer Richtung der Gasturbine und des äußeren Gehäuseelements 12 innenseitig des äußeren Gehäuseelements 12 angeordnet. Das äußere Gehäuseelement 12 ist beispielsweise über Streben mit dem Nabenelement verbunden, wobei diese Streben in Umfangsrichtung des Nabenelement über dessen Umfang verteilt angeordnet sind.

Die Gasturbine, insbesondere Flugtriebwerk, umfasst beispielsweise wenigstens zwei Turbinenbereiche. Ein erster der Turbinenbereiche ist als Niederdruck-Turbinenbereich oder Niederdruck-Turbine ausgebildet, wobei ein zweiter der Turbinenbereiche als Hochdruck-Turbinenbereich oder Hochdruck-Turbine der Gasturbine ausgebildet ist. Die Niederdruck-Turbine umfasst wenigstens einen Rotor, welcher um eine Dreh- bzw. Triebwerksachse relativ zu dem äußeren Gehäuseelement 12 drehbar ist. Auch die Hochdruck-Turbine umfasst wenigstens einen Rotor, welcher um die Drehachse relativ zu dem äußeren Gehäuseelement 12 drehbar ist. Zumindest einer der Rotoren ist beispielsweise an dem Nabenelement um die Drehachse relativ zu dem Nabenelement und dem äußeren Gehäuseelement 12 drehbar gelagert. Hierzu ist der wenigstens eine Rotor beispielsweise zumindest teilweise in dem Nabenelement oder in einer zumindest teilweise durch das Nabenelement begrenzten Nabenkammer oder Lagerkammer angeordnet. In Fig. 1 ist ausschnittsweise ein weiteres Gehäuseelement 14 der Gasturbine erkennbar. Das Gehäuseelement 14 ist beispielsweise ein Gehäuseelement der Hochdruck-Turbine.

Das Zwischengehäuse 10 umfasst eine Mehrzahl von Kanalsegmenten, von denen in Fig. 1 ein mit 16 bezeichnetes Kanalsegment erkennbar ist. Die folgenden Ausführungen zum Kanalsegment 16 können ohne weiteres auch auf die übrigen Kanalsegmente übertragen werden. Die Kanalsegmente 16 sind in radialer Richtung innenseitig des äußeren Gehäuseelements 12 angeordnet und in radialer Richtung nach innen zumindest teilweise von dem äußeren Gehäuseelement 12 beabstandet. Vorzugsweise sind die Kanalsegmente 16 in radialer Richtung nach innen vollständig von dem äußeren Gehäuseelement 12 beabstandet, so dass sie das äußere Gehäuseelement 12 nicht berühren.

Darüber hinaus sind die Kanalsegmente in Umfangsrichtung des äußeren Gehäuseelements 12 aufeinanderfolgend, das heißt hintereinander angeordnet. Durch die Kanal segmente 16 ist jeweils wenigstens ein von einem ersten Gas durchströmbarer Kanal zumindest in radialer Richtung wenigstens teilweise begrenzt. Der zumindest teilweise in radialer Richtung des äußeren Gehäuselements 12 durch das Kanalsegment 16 begrenzte Kanal ist in Fig. 1 mit 18 bezeichnet.

Das den Kanal 18 durchströmende Gas weist eine hohe Temperatur auf und ist somit ein Heißgas, welches mittels des Kanals 18 von der Hochdruck-Turbine zur Niederdruck-Turbine geführt wird. Somit ist der Kanal 18 in Strömungsrichtung des Heißgases durch den Kanal 18 zwischen der Hochdruck-Turbine und der Niederdruck-Turbine angeordnet, wobei die Niederdruck-Turbine stromab der Hochdruck-Turbine und stromab des Zwischengehäuses 10 angeordnet ist.

In Fig. 1 ist ferner erkennbar, dass durch das äußere Gehäuseelement 12 und die Kanalsegmente 16 zumindest teilweise eine den Kanal 18 umgebende Kammer 20 begrenzt ist, wobei die Kammer 20 beispielsweise als Ringraum ausgebildet ist. Daher werden die Kanalsegmente 16 auch als "Ringraumsegmente" bezeichnet. Der Ringraum ist zumindest in radialer Richtung außenseitig des Kanalsegments 16 und somit in radialer Richtung zwischen dem jeweiligen Kanalsegment und dem äußeren Gehäuseelement 12 angeordnet.

Der Ringraum (Kammer 20) ist mit einem weiteren Gas in Form von Sperrluft beaufschlagbar. Dies bedeutet, dass in die Kammer 20 Sperrluft eingeleitet werden kann. Diese Sperrluft kann die jeweiligen Kanalsegmente 16 außenumfangsseitig und das äußere Gehäuseelement 12 innenumfangsseitig zumindest teilweise umströmen und weist gegenüber dem Heißgas einen höheren Druck, jedoch eine geringere Temperatur auf. Somit wirkt die Sperrluft als Kühlluft, mittels welcher die Kanalsegmente 16 und das äußere Gehäuseelement 12 gekühlt werden können. Die Sperrluft wird beispielsweise in die Kammer 20 eingeblasen.

Um nun eine besonders einfache Montage und Herstellung des Zwischengehäuses 10 zu realisieren, ist ein den Kanalsegmenten gemeinsames, einteilig ausgebildetes Ringelement 22 vorgesehen, über welches die Kanalsegmente 16 an dem äußeren Gehäuseelement 12 gehalten sind. Das Ringelement kann insbesondere einstückig ausgebildet sein. Das Ringelement 22 ist ausschnittsweise auch aus Fig. 2 erkennbar. Vorliegend ist das Ringelement 22 in Umfangsrichtung des Gehäuseelements 12 zumindest überwiegend, insbesondere vollständig, geschlossen. Durch die Verwendung des vorliegend in Umfangsrichtung vollständig geschlossenen Ringelements 22 kann vermieden werden, für jedes der Kanalsegmente 16 einen eigenen Halter verwenden zu müssen. Anstelle dieser Vielzahl von voneinander separaten Haltern kann das einteilige Ringelement 22 verwendet werden. Durch den Einsatz des Ringelements 22 kann die Kammer 20 auch besonders gut abgedichtet werden, da im Gegensatz zu dem Einsatz einer Vielzahl an Haltern Segmentspalte entfallen. Dadurch können übermäßige Kühlluftleckagen aus der Kammer 20 vermieden werden.

Aus Fig. 2 ist besonders gut erkennbar, dass das Ringelement 22 einen Ringkörper 24 aufweist, welcher zumindest im Wesentlichen nach Art eines umlaufend zumindest überwiegend, insbesondere vollständig, geschlossenen Rings ausgebildet ist. Das Ringelement 22 umfasst ferner Laschen 26, welche in radialer Richtung nach innen von dem Ringkörper 24 abstehen. Die Laschen 26 sind dabei einstückig mit dem Ringkörper 24 ausgebildet. In Umfangsrichtung zwischen den Laschen 26 sind jeweilige Durchgangsöffnungen 28 vorgesehen. Über diese Durchgangsöffnungen sind die Laschen 26 in Umfangsrichtung voneinander beabstandet. Die Durchgangsöffnungen 28 weisen dabei jeweilige Durchtrittsrichtungen auf, welche in axialer Richtung verlaufen. Dies bedeutet, dass die Durchgangsöffnungen 28 in axialer Richtung offen sind. Darüber hinaus sind die Durchgangsöffnungen 28 auch in radialer Richtung nach innen hin offen. In radialer Richtung nach außen hin sind die Durchgangsöffnungen 28 durch den Ringkörper 24 begrenzt. Die Durchgangsöffnungen 28 wirken als Entlastungsschlitze, mittels welchen übermäßige, thermisch bedingte Umfangsspannungen im Ringelement 22 vermieden werden können.

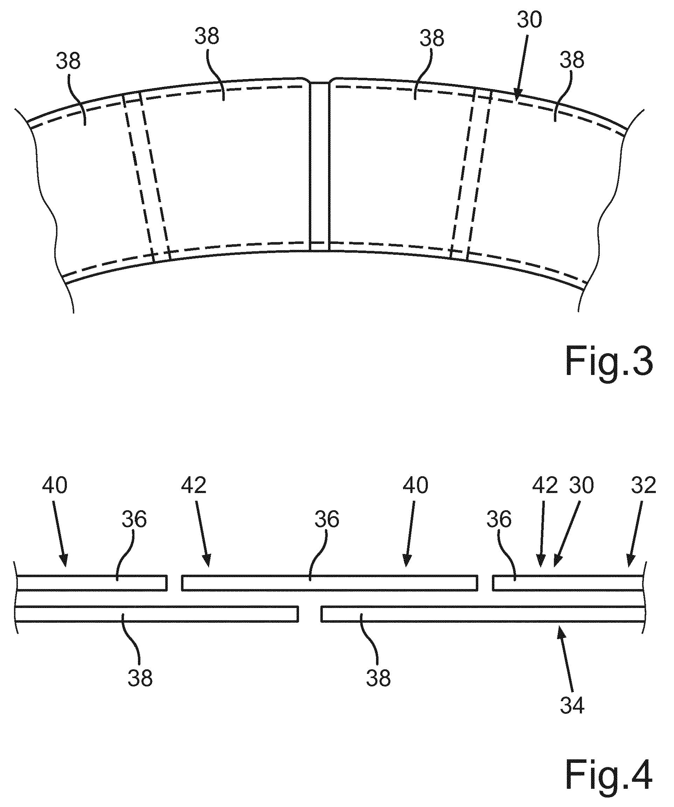

Im fertig hergestellten Zustand des Zwischengehäuses 10 ist eine besonders gut aus den Figuren 3 und 4 erkennbare Dichtungseinrichtung 30 vorgesehen, mittels welcher die Durchgangsöffnungen 28 verschlossen und abgedichtet sind. Hierdurch kann ein übermäßiger Austritt von Sperrluft aus der Kammer 20 vermieden werden.

In Fig. 4 ist besonders gut erkennbar, dass die Dichtungseinrichtung 30 zwei in axialer Richtung hintereinander angeordnete Lagen 32 und 34 mit jeweiligen Dichtungselementen 36 und 38 aufweist. Die Dichtungselemente 38 sind als Dichtungsplatten ausgebildet. Beispielsweise sind die Dichtungselemente 36, 38 aus einem metallischen Werkstoff ausgebildet, wobei die Dichtungselemente 36, 38 als Dichtbleche ausgebildet sein können. Die Dichtungselemente 36 der ersten Lage 32 und die Dichtungselemente 38 der zweiten Lage 34 sind in Umfangsrichtung des äußeren Gehäuseelements 12 zueinander versetzt angeordnet und überlappen sich in axialer Richtung gegenseitig teilweise. In Fig. 4 ist besonders gut erkennbar, dass die Dichtungselemente 36, 38 nach Art einer Ziegelsteinmauer versetzt angeordnet sind.

Dies bedeutet, dass jeweils ein Teilbereich 40 eines ersten der Dichtungselemente 36 und ein Teilbereich 42 eines zweiten der Dichtungselemente 36 in axialer Richtung durch ein den Teilbereichen 40,42 gemeinsames der Dichtungselemente 38 in axialer Richtung überdeckt sind. Mit anderen Worten überdeckt jeweils eines der Dichtungselemente 38 jeweilige Teilbereiche von zwei der Dichtungselemente 36 in axialer Richtung. Hierdurch kann eine besonders vorteilhafte Dichtwirkung realisiert werden. Bezogen auf die axiale Richtung sind die Dichtungselemente 38 auf einer der Kammer 20 zugewandten Seite der Dichtungselemente 36 angeordnet.

Darüber hinaus ist aus Fig. 1 erkennbar, dass die Dichtungselemente 36, 38 auf einer der Kammer 20 in axialer Richtung zugewandten Seite 44 des Ringelements 22, insbesondere der Laschen 26 angeordnet sind. Da in der Kammer 20 ein höherer Druck als im Kanal 18 herrscht, werden dadurch die Dichtungselemente 36, 38 gegeneinander und gegen das Ringelement 22 gedrückt. Dadurch wird die Dichtwirkung nochmals verstärkt.

Ferner ist aus Fig. 1 erkennbar, dass die Dichtungselemente 36, 38 der Dichtungseinrichtung 30 zwischen den Laschen 26 und einem Stützflansch 46 des Kanalsegments 16 angeordnet sind.

Dadurch sind die Dichtungselemente 36, 38 zwischen den Laschen 26 und dem Stützflansch 46 verklemmt und sicher positioniert.

Durch die Dichtungselemente 36, 38 ist ein Dichtblechpaket geschaffen, welches beispielsweise zumindest teilweise in einer korrespondierenden Nut 48 der jeweiligen Kanalsegmenten aufgenommen ist. Hierdurch ist das Dichtblechpaket einerseits geführt. Andererseits erfolgt eine Führung und Positionierung des Dichtblechpakets durch eine Verspannung, welche mittels einer in Fig. 1 erkennbaren Schraubverbindung 50 bewirkt ist. Am Beispiel der Schraubverbindung 50 ist erkennbar, dass die Kanalsegmente mittels wenigstens einer jeweiligen Schraubverbindung am Ringelement 22 befestigt sein können.

Die Schraubverbindung 50 umfasst ein Schraubelement in Form einer Schraube 52, welche jeweilige Durchgangsöffnungen 54 (Fig. 2) der Laschen 26 sowie jeweilige Durchgangsöffnungen der Dichtungselemente 36, 38 und des Stützflansches 46 durchdringt. Am Stützflansch 46 ist ein weiteres Schraubelement, vorliegend in Form einer Mutter 56, vorgesehen. Die Schraube 52 weist ein Außengewinde auf, wobei die Mutter 56 ein mit dem Außengewinde korrespondierendes Innengewinde aufweist. Die Schraube 52 ist dabei über ihr Außengewinde in das Innengewinde der Mutter 56 eingeschraubt, so dass dadurch das Kanalsegment 16 am Ringelement 22 befestigt ist. Ferner sind die Dichtungselemente 36, 38 mittels der Schraubverbindung 50 zwischen dem Stützflansch 46 und den Laschen 26 geklemmt.

Die Mutter 56 ist beispielsweise als Einnietmutter ausgebildet. Alternativ oder zusätzlich zur mittels der Schraubverbindung 50 bewirkten Befestigung des Kanalsegments 16 am Ringelement 22 kann eine andere Befestigung des Kanalsegments 16 am Ringelement 22 vorgesehen sein. Beispielsweise ist das Kanalsegment 16 formschlüssig am Ringelement 22 gehalten. Hierzu weist beispielsweise das Kanalsegment 16 oder das Ringelement 22 einen Haken auf, welcher in eine korrespondierende Nut des Ringelements 22 oder des Kanalsegments 16 eingreift. Hierdurch ist eine Verbindung zwischen dem Kanalsegment 16 und dem Ringelement 22 durch ein Nut-Haken-Konzept (nicht dargestellt) realisiert.

Zur radialen Halterung des Ringelements 22 am äußeren Gehäuseelement 12 weist das äußere Gehäuseelement 12 einen Flansch 58 auf. Darüber hinaus weist das Gehäuseelement 14 einen Flansch 60 auf. Der Flansch 60 ist in axialer Richtung zumindest teilweise durch den Flansch 58 überdeckt und umgekehrt. Über die Flansche 58, 60 sind die Gehäuseelemente 12, 14 miteinander verbunden. Darüber hinaus ist ein beispielsweise durch den Ringkörper 24 gebildeter Flansch des Ringelements 22 in axialer Richtung zwischen den Flanschen 58, 60 angeordnet und zwischen den Flanschen 58, 60 eingeklemmt. Dadurch ist das Kanalsegment 16 in radialer Richtung am äußeren Gehäuseelement 12 gehalten.

Alternativ oder zusätzlich kann eine andere Halterung des Ringelements 22 am äußeren Gehäuseelement 12 vorgesehen sein. Dabei ist es denkbar, das Ringelement 22 mittels wenigstens einer separaten Verschraubung, das heißt Schraubverbindung, am äußeren Gehäuseelement 12 zu befestigen. Das Ringelement 22 mit seinen Bauelementen kann zudem einstückig mittels eines additiven Herstellungsverfahrens hergestellt sein.

### Bezugszeichenliste

- 10: Zwischengehäuse
- 12: äußeres Gehäuseelement
- 14: Gehäuseelement
- 16: Kanalsegment
- 18: Kanal
- 20: Kammer
- 22: Ringelement
- 24: Ringkörper
- 26: Lasche
- 28: Durchgangsöffnung
- 30: Dichtungseinrichtung
- 32: Lage
- 34: Lage
- 36: Dichtungselement
- 38: Dichtungselement
- 40: Teilbereich
- 42: Teilbereich
- 44: Seite
- 46: Stützflansch
- 48: Nut
- 50: Schraubverbindung
- 52: Schraube
- 54: Durchgangsöffnung
- 56: Mutter
- 58: Flansch
- 60: Flansch

## Patentansprüche

1. Zwischengehäuse (10) für eine Gasturbine, mit wenigstens einem äußeren Gehäuseelement (12) und mit einer Mehrzahl von in radialer Richtung innenseitig des Gehäuseelements (12) angeordneten und in Umfangsrichtung des Gehäuseelements (12) aufeinanderfolgenden Kanalsegmenten (16), durch welche jeweils wenigstens ein von einem ersten Gas durchströmbarer Kanal (18) zumindest in radialer Richtung wenigstens teilweise begrenzt ist,
wobei ein den Kanalsegmenten (16) gemeinsames, einteilig ausgebildetes Ringelement (22) vorgesehen ist, über welches die Kanalsegmente (16) an dem äußeren Gehäuseelement (12) gehalten sind,
**dadurch gekennzeichnet, dass**
das Ringelement (22) einen Ringkörper (24) aufweist, von welchem in radialer Richtung nach innen Laschen (26) abstehen, über welche die Kanalsegmente (16) an dem Ringelement (22) gehalten sind, wobei in Umfangsrichtung zwischen den Laschen (26) Durchgangsöffnungen (28) vorgesehen sind, über welche die Laschen (26) in Umfangsrichtung voneinander beabstandet sind.

2. Zwischengehäuse (10) nach Anspruch 1,
**dadurch gekennzeichnet, dass**
die Durchgangsöffnungen (28) mittels einer Dichtungseinrichtung (30) verschlossen sind.

3. Zwischengehäuse (10) nach Anspruch 2,
**dadurch gekennzeichnet, dass**
die Dichtungseinrichtung (30) zumindest zwei in axialer Richtung hintereinander angeordnete Lagen (32, 34) mit jeweiligen Dichtungselementen (36, 38) aufweist, wobei die Dichtungselemente (36) einer ersten der Lagen (32, 34) und die Dichtungselemente (38) einer zweiten der Lagen (32, 34) in Umtangsrichtung zueinander versetzt angeordnet sind und sich in axialer Richtung gegenseitig teilweise überlappen.

4. Zwischengehäuse (10) nach einem der vorhergehenden Ansprüche,
**dadurch gekennzeichnet, dass**
durch das äußere Gehäuseelement (12) und die Kanalsegmente (16) zumindest teilweise eine den Kanal (18) zumindest teilweise umgebende Kammer (20) begrenzt ist, welche mit einem weiteren Gas, das gegenüber dem ersten Gas einen höheren Druck aufweist, beaufschlagbar ist.

5. Zwischengehäuse (10) nach den Ansprüchen 3 und 4,
**dadurch gekennzeichnet, dass**
die Dichtungselemente (36, 38) auf einer der Kammer (20) zugewandten Seite (44) des Ringelements (22), insbesondere der Laschen (26), angeordnet sind.

6. Zwischengehäuse (10) nach einem der vorhergehenden Ansprüche,
**dadurch gekennzeichnet, dass**
die Kanalsegmente (16) jeweils mittels wenigstens einer Schraubverbindung (50) an dem Ringelement (22) befestigt sind.

7. Zwischengehäuse (10) nach einem der vorhergehenden Ansprüche,
**dadurch gekennzeichnet, dass**
das Ringelement (22) mittels wenigstens einer Schraubverbindung an dem äußeren Gehäuseelement (10) gehalten ist.

8. Zwischengehäuse (10) nach einem der vorhergehenden Ansprüche,
**dadurch gekennzeichnet, dass**
das Ringelement (22) in axialer Richtung teilweise zwischen dem äußeren Gehäuseelement (12) und wenigstens einem weiteren Gehäuseelement (14) der Gasturbine anordenbar und durch Einklemmen des Ringelements (22) zwischen den Gehäuseelementen (12, 14) in radialer Richtung fixierbar ist.

9. Zwischengehäuse (10) nach einem der vorhergehenden Ansprüche,
**dadurch gekennzeichnet, dass**
das Ringelement (22) und/oder das Kanalsegment (16) mindestens einen Haken aufweist, wobei der Haken zum Eingriff in eine korrespondierende Nut des Kanalelements (16) und/oder des Ringelements (22) ausgebildet ist.

10. Zwischengehäuse (10) nach einem der vorhergehenden Ansprüche,
**dadurch gekennzeichnet, dass**
das Ringelement (22) einstückig ausgebildet ist.

11. Gasturbine mit wenigstens einem Zwischengehäuse (10) nach einem der vorhergehenden Ansprüche.

## Claims

1. An intermediate housing (10) for a gas turbine, with at least one outer housing element (12) and with a plurality of duct segments (16) which are positioned in the radial direction within the housing element (12) and are successive in the peripheral direction of the housing element (12), through which duct segments at least one duct (18) for each through which an initial gas can flow is restricted at least partially at least in the radial direction,
wherein an integrally formed annular element (22) that is common to the duct segments (16) is provided, by means of which the duct segments (16) are held at the outer housing element (12),
**characterised in that**
the annular element (22) comprises an annular body (24), from which straps (26) stick out towards the inside in the radial direction, through which the duct segments (16) are held at the annular element (22), wherein passage openings (28) are provided in the peripheral direction between the straps (26), through which the straps (26) are spaced from one another in the peripheral direction.

2. The intermediate housing (10) of claim 1,
**characterised in that**
the passage openings (28) are sealed with a sealing device (30)

3. The intermediate housing (10) of claim 2,
**characterised in that**
the sealing device (30) comprises at least two layers (32, 34) positioned one after the other in the axial direction each with a sealing element (36, 38), wherein said sealing elements (36) of a first of the layers (32, 34) and the sealing elements (38) of a second of the layers (32, 34) are offset from one another in the peripheral direction and partially overlap reciprocally in the axial direction.

4. The intermediate housing (10) of any one of the preceding claims,
**characterised in that**
the outer housing element (12) and the duct segments (16) at least partially restrict a chamber (20), which at least partially surrounds the duct (18), which chamber can be supplied with another gas, which comprises a higher pressure than the first gas.

5. The intermediate housing (10) of claims 3 and 4,
**characterised in that**
the sealing elements (36, 38) are positioned on a side (44) of the annular element (22) facing the chamber (20), particularly the straps (26).

6. The intermediate housing (10) of any one of the preceding claims,
**characterised in that**
the duct segments (16) are each attached with at least one screw connection (50) to the annular element (22).

7. The intermediate housing (10) of any one of the preceding claims,
**characterised in that**
the annular element (22) is held at the outer housing element (10) using at least one screw connection.

8. The intermediate housing (10) of any one of the preceding claims,
**characterised in that**
the annular element (22) can be positioned in the axial direction partially between the outer housing element (12) and at least one other housing element (14) of the gas turbine and can be fixed in the radial direction by clamping the annular element (22) between the housing elements (12, 14).

9. The intermediate housing (10) of any one of the preceding claims,
**characterised in that**
the annular element (22) and/or the duct segment (16) comprises at least one hook, wherein said hook is formed to engage a corresponding groove of the duct element (16) and/or the annular element (22).

10. The intermediate housing (10) of any one of the preceding claims,
**characterised in that**
the annular element (22) is integrally formed.

11. A gas turbine with at least one intermediate housing (10) of any one of the preceding claims.

## Revendications

1. Boîtier intermédiaire (10) destiné à une turbine à gaz, comprenant au moins un élément de boîtier extérieur (12) et une pluralité de segments de conduit (16) qui se suivent dans la direction circonférentielle de l'élément de boîtier (12) et qui sont disposés du côté intérieur de l'élément de boîtier (12) dans la direction radiale et qui délimitent chacun au moins partiellement au moins dans la direction radiale au moins un conduit (18) dans lequel circule un premier gaz,
un élément annulaire (22) formé d'une pièce et commun aux segments de conduit étant prévu qui maintient les segments de conduit (16) sur l'élément de boîtier extérieur (12), **caractérisé en ce que** l'élément annulaire (22) comporte un corps annulaire (24) duquel des pattes (26) s'étendent vers l'intérieur dans la direction radiale, lesquelles maintiennent les segments de conduit (16) sur l'élément annulaire (22), des orifices de passage (28) sont prévus entre les pattes (26) dans la direction circonférentielle au moyen desquels les pattes (26) sont espacées les unes des autres dans la direction circonférentielle.

2. Boîtier intermédiaire (10) selon la revendication 1, **caractérisé en ce que** les orifices de passage (28) sont fermées à l'aide d'un moyen d'étanchéité (30).

3. Boîtier intermédiaire (10) selon la revendication 2, **caractérisé en ce que** le moyen d'étanchéité (30) comporte au moins deux couches (32, 34) disposées les unes derrière les autres dans la direction axiale et pourvues d'éléments d'étanchéité respectifs (36, 38), les éléments d'étanchéité (36) d'une première des couches (32,34) et les éléments d'étanchéité (38) d'une deuxième des couches (32, 34) étant disposés de manière décalée les uns des autres dans la direction circonférentielle et se chevauchant partiellement dans la direction axiale.

4. Boîtier intermédiaire (10) selon l'une des revendications précédentes, **caractérisé en ce que** l'élément de boîtier extérieur (12) et les segments de conduit (16) délimitent au moins partiellement une chambre (20) qui entoure au moins partiellement le conduit (18) et qui peut être alimentée avec un autre gaz dont la pression est supérieure à celle du premier gaz.

5. Boîtier intermédiaire (10) selon les revendications 3 et 4, **caractérisé en ce que** les éléments d'étanchéité (36, 38) sur un côté (44), dirigé vers la chambre (20), de l'élément annulaire (22), en particulier des pattes (26).

6. Boîtier intermédiaire (10) selon l'une des revendications précédentes, **caractérisé en ce que** les segments de conduits (16) sont fixées chacun à l'élément annulaire (22) au moyen d'au moins une liaison par vis (50).

7. Boîtier intermédiaire (10) selon l'une des revendications précédentes, **caractérisé en ce que** l'élément annulaire (22) est maintenu sur l'élément de boîtier extérieur (12) au moyen d'au moins une liaison par vis.

8. Boîtier intermédiaire (10) selon l'une des revendications précédentes, **caractérisé en ce que** l'élément annulaire (22) peut être disposé dans la direction axiale partiellement entre l'élément de boîtier extérieur (12) et au moins un autre élément de boîtier (14) de la turbine à gaz et peut être fixé dans la direction radiale entre les éléments de boîtier (12, 14) par serrage de l'élément annulaire (22).

9. Boîtier intermédiaire (10) selon l'une des revendications précédentes, **caractérisé en ce que** l'élément annulaire (22) et/ou le segment de conduit (16) comporte au moins un crochet, le crochet étant adapté pour s'engager dans une rainure correspondante de l'élément de conduit (16) et/ou de l'élément annulaire (22).

10. Boîtier intermédiaire (10) selon l'une des revendications précédentes, **caractérisé en ce que** l'élément annulaire (22) est formé d'une seule pièce.

11. Turbine à gaz comportant au moins un boîtier intermédiaire (10) selon l'une des revendications précédentes.
